**Europäisches Patentamt**

**European Patent Office**

**Office européen des brevets**

(19)

(11) Publication number: **0 066 462**
**A2**

(12) # EUROPEAN PATENT APPLICATION

(21) Application number: **82302747.9**

(22) Date of filing: **27.05.82**

(51) Int. Cl.³: **H 02 G 3/28**

(30) Priority: **29.05.81 US 268243**

(43) Date of publication of application:
**08.12.82 Bulletin 82/49**

(84) Designated Contracting States:
**DE FR GB**

(71) Applicant: **STEELCASE INC.**
**1120 36th Street, S.E.**
**Grand Rapids, Michigan(US)**

(72) Inventor: **Speet, Larry Albert**
**259 Roosevelt Avenue**
**Holland Michigan(US)**

(74) Representative: **Robinson, Anthony John**
**Metcalf et al,**
**Kilburn & Strode 30 John Street**
**London, WC1N 2DD(GB)**

(54) Partitions having raceways for communication cables.

(57) A movable room divider or partition having a panel section (11) supported on feet (14) is provided with a low profile raceway (2) for communication cables and other casual wiring. The raceway comprises a U-shaped channel (3) connected with the partition section, and extending along and beneath the base of the panel section. The channel has a dual durometer construction with a rigid web (5) for supporting the cables, and a pair of upstanding flanges (7) with free edges disposed adjacent the partition base to enclose the raceway. At least one of the flanges is resiliently flexible to permit localized, elastic deformation of the flange for inserting and withdrawing the cables from the raceway.

FIG 2

## PARTITIONS HAVING RACEWAYS
## FOR COMMUNICATION CABLES

This invention relates to partitions such as movable room divider panels or partitions, and in particular to raceways for communication cables therein.

Heretofore, partitions have been provided with wiring raceways which extend along the base of the partition panel. These partition wireways are designed to house both power wires, such as 110V or 220-240V AC lines, for lighting, typewriters, and other office equipment, as well as communication lines and other casual wiring. A removable cover is provided to access the wireway. The electrical power cables are generally retained in a separate, rigid enclosure within the wireway to positively segregate them from the other wires.

The above described partition wireway arrangements provide limited storage space for communication cables and other casual wiring. Also, such partitions are difficult to wire and cannot be easily modified to accept additional casual wires, as the covers of the panel wireways must be removed and replaced to accomplish insertion or withdrawal of wiring from the raceway. The removal and replacement of the wireway covers is especially difficult and time consuming when furniture and other heavy objects have been placed directly in front of the covers, as is normally the case in partitioned areas.

According to the present invention, a partition has a panel section with depending, spaced apart feet for supporting the panel section in a raised position and a raceway for communication cables and the like, the raceway comprising: a U-shaped channel connected with the panel section and extending along and beneath the base of the panel section; the U-shaped channel having a dual durometer construction with a rigid web for supporting the cables thereon, and a pair of integrally formed, upstanding flanges with free edges disposed adjacent the bottom of the panel section to substantially enclose the raceway; one of the flanges being resiliently flexible, with sufficient stiffness to normally maintain the U-shape of the channel and thereby retain and conceal the cables therein, and sufficient flexibility to permit localized, manual, elastic deformation along the said one flange free edge for inserting and withdrawing the cables from the raceway.

The production of dual durometer plastics objects by extrusion is known; thus it is possible to produce an object part of which is more flexible than another part, durometer being a measure of flexibility as well as of hardness for plastic articles. In a partition constructed in accordance with the invention the U-shaped channel forming the wireway has a rigid web, for example with a durometer of 75 or more on the Durometer-Shore Scale 'D', and at least one flexible flange, for example with a durometer below 75 on Scale D (which approximately corresponds to a durometer below 98 on Scale A to which reference is made below).

The rigid web will be sufficiently strong to support the cables and to support the flange while the flange will have sufficient stiffness to normally maintain the U-shape of the channel and thereby retain and conceal the cables therein, and yet sufficient flexibility to permit localized, manual, elastic deformation for insertion and withdrawal of the cables from the raceway.

The wireway is located beneath the base of the panel section and hence, particularly with U.S.-style panels, close to the floor but access to the wireway is readily obtained without release of latches or removal of any covers. The wireway may easily be designed so as to present a very neat, clean-cut and streamlined appearance and may readily be designed to be retrofitted to existing U.S.-style partitions.

The partition may include a rigid, elongate support plate connected with the feet and extending below the base; the said web including an upstanding pedestal extending along the longitudinal centreline thereof, with an upper edge of the pedestal connected with the rigid support plate for suspending the channel therefrom. This provides a wireway with a rigid construction and a central divider to form two separate wire storage areas.

The invention may be carried into practice in various ways but two partitions embodying the invention will now be described by way of example with reference to the accompanying drawings, in which:

Figure 1 is a fragmentary, front elevation of three interconnected partitions, each having a wireway and shown with a communication cable being inserted into the wireway of the centre partition;

Figure 2 is a fragmentary, vertical cross-section of the partition wireway, taken along the line II-II, Figure 1;

Figure 3 is a fragmentary, vertical cross-section of the partition wireway, taken along the line III-III, Figure 2;

Figure 4 is a fragmentary, vertical cross-section of the partition wireway, taken along the line IV-IV, Figure 1;

Figure 5 is a fragmentary, front elevetion of a single partition, having a raised base, and with the partition wireway completely removed;

Figure 6 is a top plan view of an integral channel member and support plate for the partition wireway;

Figure 7 is a fragmentary, front elevation of the partition, shown with the wireway installed therein, and a portion of the wireway thereof broken away to reveal the internal construction;

Figure 8 is a bottom plan view of the channel member, shown connected with the partition;

Figure 9 is a fragmentary, vertical cross-sectional view of another partition showing the wireway thereof;

Figure 10 is a fragmentary, vertical cross-sectional view of the second partition wireway, taken along the line X-X, Figure 9;

Figure 11 is a top plan view of a channel member of the partition wireway shown in Figures 9 and 10;

Figure 12 is a top plan view of the channel member illustrated in Figures 9 to 11, shown connected with a support plate;

Figure 13 is a fragmentary, front elevational view of a partition with the wireway of Figures 9 to 12 installed therein, and a portion of the wireway broken away to reveal the internal construction; and

Figure 14 is a bottom plan view of the partition and wireway shown in Figures 9 to 13.

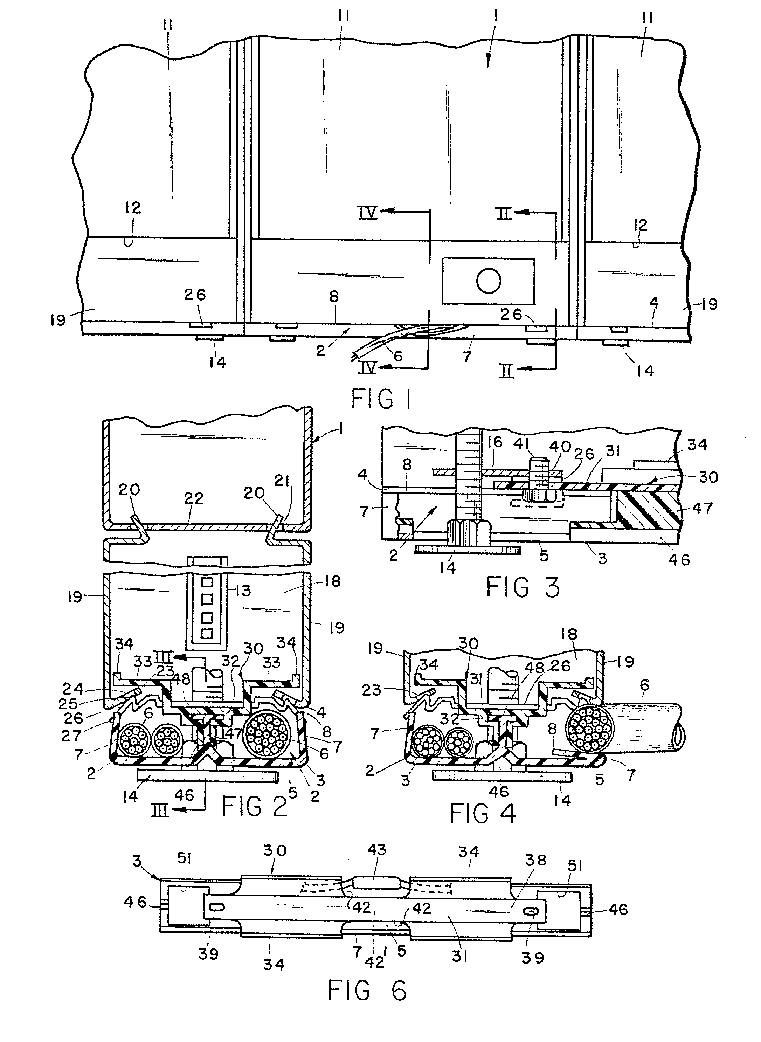

Figure 1 shows a partition having a low profile wiring raceway 2 for communication cables, and other casual wiring. The raceway 2 comprises a U-shaped channel 3 (Figure 2) extending along and beneath the base 4 of the partition. The channel 3 has a rigid web 5 for supporting cables 6 thereon, and a pair of integrally formed, upstanding flanges 7 with free edges 8 disposed adjacent the partition base 4 to enclose the sides of the raceway 2. At least one of the flanges 7 is resiliently flexible to permit localized, elastic deformation of the flange for inserting and withdrawing the cable 6 from the raceway.

As best illustrated in Figure 1, each of the partitions 1 is a movable room divider having a construction which is generally considered conventional in the United States, hereinafter referred to as "U.S.-style". Partitions which are used in Europe, and other foreign countries, generally have a much higher space between the bottom of the partition and the floor, and include power wireways with substantially imperforate sheet metal bottoms from which the partition supporting legs protrude.

In the illustrated example of a U.S.-style partition, the partition 1 (Figure 5) includes a panel section 11 having a bottom edge 12 with a rigid, electrical power post 13 mounted in the wireway thereunder. A pair of adjustable feet 14 are mounted on brackets 15, depend or extend downwardly from the panel's lower edge 12 adjacent each end of the partition, and support the partition on the floor or ground in an upright orientation. Each bracket 15 includes an inwardly directed tab or tang 16 for supporting the channel 3 thereon, as described in greater detail hereinafter.

A power wireway 18 (Figure 2) houses 220 volt AC power lines. Removable cover plates 19 are provided on both sides of the partition 1 to enclose the power wireway 18, and include upper tabs 20 which are inserted into mating apertures 21 in the bottom 22 of the panel section 11. The lower edge of each cover 19 includes an upturned, inwardly inclined flange 23 with apertures 24 therein. Each aperture 24 mates with an upwardly protruding portion 25 of a clip 26 to form a snap lock which holds the bottom edge of the cover in place. Each clip 26 also includes an outwardly inclined portion 27, which when pushed inwardly by the installer, releases the snap lock, such that the cover 19 can be swung outwardly and removed. The outer portion 27 of each clip 26 extends downwardly over the upper edge 8 of the flange 7 and deforms the flange slightly inwardly where they abut.

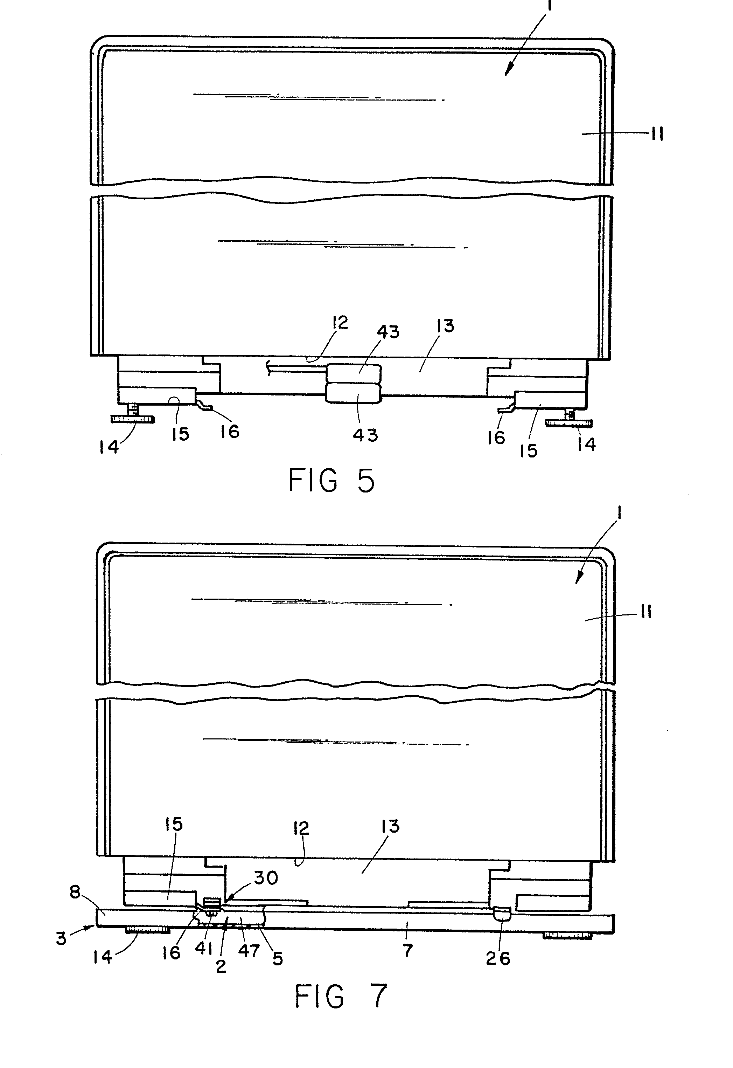

The channel 3 is supported along the centreline of the channel web 5 in a manner which forms two receptacles for communication cables 6, and permits insertion and withdrawal of the cables from either side of the raceway 2. In the embodiment illustrated in Figures 1 to 8, the web 5 is attached to and supported by a rigid, elongate tray or plate 30. With reference to Figure 2, the support plate 30 is an extruded channel, comprising a U-shaped medial portion 31 having a T-shaped keyway 32 extending along the base thereof. A pair of flanges 33 extends laterally outwardly in opposite directions from the upper ends of the channel. The lower surfaces of the flanges 33 are positioned just above the terminal edges of the left and right hand cover flanges 23, and may be abuttingly supported thereon to prevent the support plate 30 from sagging at the centre of the raceway. The side edges of the flanges 33 include upwardly turned ribs 34 positioned adjacent to the interior surfaces of wireway covers 19, and act as a kick guard to help prevent the cover from being deformed inwardly when impacted. Preferably, the support plate 30 is constructed of a sturdy, nonconductive material, such as rigid polyvinylchloride.

With reference to Figures 5 to 8, the medial portion 31 of the support plate 30 extends between bracket tabs 16, and includes apertures 39 through the ends thereof. The apertures 39 are vertically aligned with tapped apertures 40 (Figure 3) in the tabs 16, and receive threaded fasteners 14 therethrough.

The clips 26 are positioned between the tabs 16 and the support plate 30, and are retained in place by the fasteners 41. As shown in Figure 6, portions of the flanges 33 disposed adjacent the plate ends 38 and the centre 42' of the support plate 30 have been removed to form cavities 42 in which connectors 43 are received and stored. The connectors 43 can be retained on both sides of the raceway 2.

The channel web (Figure 2) is rigid for supporting cables 6 thereon, and at least one of the flanges 7 is resiliently flexible, in the nature of a boot, with sufficient stiffness to normally maintain the U-shape of the channel, and thereby retain and conceal the cables 6 therein, and yet sufficient flexibility to permit localized, manual, elastic deformation for inserting and withdrawing the cables from the raceway.

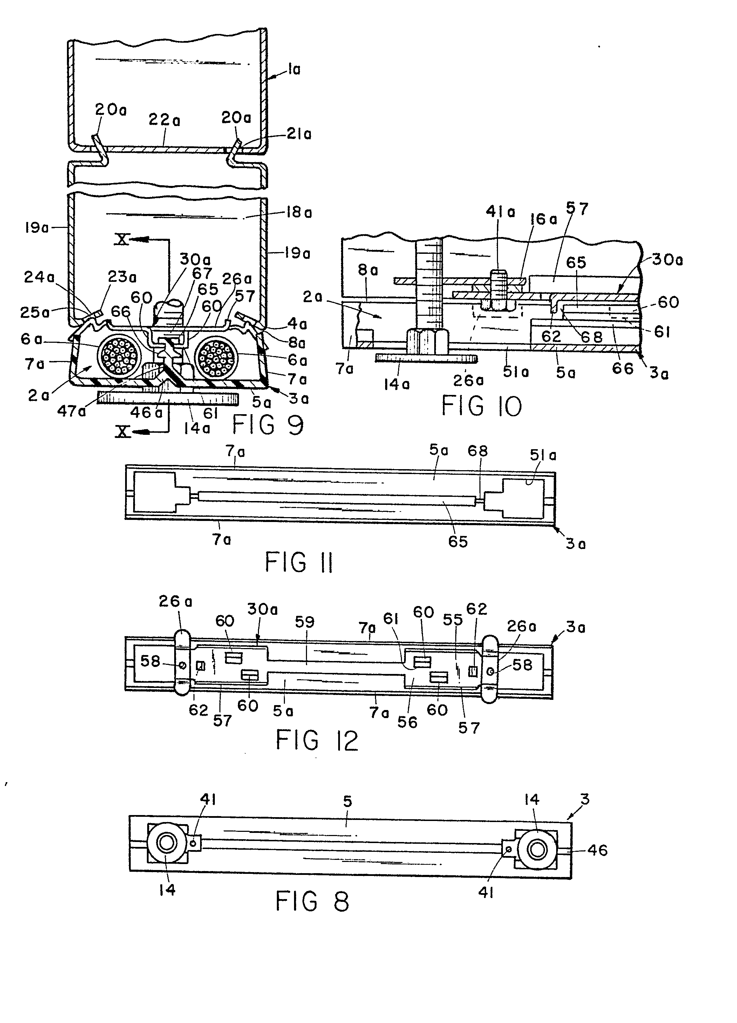

The channel illustrated in Figures 1 to 8 is an integrally moulded structure, wherein both of the flanges 7 are resiliently flexible. The channel 3 is constructed from an extruded, dual durometer material i.e. the channel 3 while being a single integral extrusion has different parts made of materials of different durometer i.e. different hardnesses. Thus, the web 5 is made from a relatively rigid material such as a rigid PVC, and the flanges 7 integrally moulded therewith along the side edges of the web are constructed of a resiliently flexible material, such as a synthetic resin having a durometer in the range of 90 to 100 on the Shore Scale 'A' and thus falling within the class of plastics usually described as semirigid. The channel web 5 includes an upwardly protruding, integral V-shaped ridge 46 extending longitudinally along the centreline of the web. A pedestal 47 is formed integrally with the ridge 46, and extends vertically upwardly therefrom with a T-shaped flange or rib 48 extending along the upper edge thereof. The rib 48 is shaped to be slidingly received and positively retained in the keyway 32 of the support plate 30. The pedestal 47 extends substantially continuously along the length of the web 5 in the nature of a wall, thereby dividing the interior of the raceway 2 into two separate receptacles which are insulated and separated by the pedestal wall. The channel web 5 preferably has a width sufficient to receive and retain four conventionally sized, communication cables on both sides of the pedestal wall 47. In the example shown in Figures 2 and 4, two 9.5mm (3/8 inch) diameter cables are positioned side-by-side in the left hand side of the raceway 2, and one 14.3mm (9/16 inch) diameter cable is positioned in the right hand side of the raceway. As best illustrated in Figures 6 and 8, the ends of the channel 3 include apertures 51 through the channel web 5 for accessing the support fasteners 41, and permitting the partition feet 14 to extend therethrough.

The support plate 30 and mating web 5 are preferably preassembled and integrally interconnected to form a very rigid, sturdy structure. The T-shaped rib 48 is slidingly drawn into and through the keyway 32, until the support plate 30 is centred over the web 5. The two parts are then integrally joined by means such as sonic welding, heat sealing, adhesive or chemical bonding. This assembly is then positioned beneath the base of the partition 1, and the feet 14 are inserted through the mating apertures 51 in the channel web 5. To retrofit the raceway 2 to existing partitions 1, the installer removes one of the power wireway covers 19 to expose the tangs 16. The support plate 30 is then attached to the lower sides of the tangs 16 by fasteners 41, with clips 26 interposed therebetween. The fasteners 41 are driven from the lower side of the tang 16. The removed cover 19 is then pivoted inwardly and snapped back into place. The ends of the channel web 5 may be provided with a longitudinal slip (not shown) along the ridge 46 between which the stem of the partition leg 14 is inserted to facilitate assembly of the raceway 2 with an already erected partition arrangement.

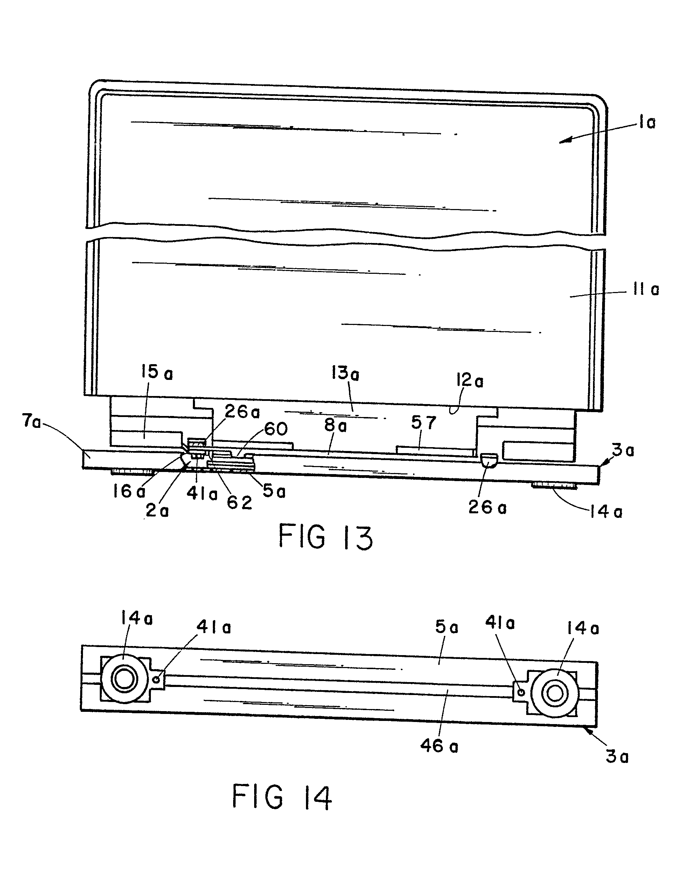

Another raceway 2a is shown in Figures 9 to 14 and has a two-piece channel and support plate arrangement. Since the raceway 2a is otherwise identical to the previously described raceway 2, similar parts appearing in Figures 1 to 8 and 9 to 14 respectively are represented by the same, corresponding reference numerals, except for the suffix "a" in the numerals of the latter. As best illustrated in Figure 12, support plate 30a is a rigid structure, constructed of sheet metal or the like, and includes a pair of enlarged ends 55 which have a rectangular shape when viewed from the top, and a base plate 56 with upstanding flanges 57. Apertures 58 are positioned through each end of the support plate 30 in which fasteners 41a (Figure 13) are received, and in this example, clips 26a are positioned over both support ends for purposes to be described in greater detail hereinafter. The centre portion 59 of support 30a is somewhat narrower than the end portions 55, and is sufficiently rigid to suspend the channel 3a and its contents therefrom without substantial deformation. Both support plate end portions 55 include two longitudinally staggered, pierced tabs 60 which extend downwardly below the lower surface of the support base 56, have an inwardly angled free end 61, and form a clip in which the channel 3a is retained. A second pair of tabs 62 is lanced in the support base 56 adjacent the ends thereof, and form stops which positively retain the channel 3a in the support 30a, as described below.

The channel 3a illustrated in Figures 9 to 14 is an integrally moulded structure, wherein both of the flanges 7a (Figure 9) are resiliently flexible for inserting and withdrawing cables 6a from both sides of the partition. Like the above described channel 3, channel 3a is constructed from an extruded, dual durometer material, with the web 5a made from a material such as a rigid PVC, and the flanges 7a integrally moulded therewith along the side edges of the web, and constructed of a resiliently flexible material, such as a synthetic resin having a durometer in the nature of 90 to 100 on the Shore Scale 'A'. Channel web 5a includes an upwardly protruding, integral V-shaped ridge 46a extending longitudinally along the centreline of the web. A pedestal 47a is formed integrally with the ridge 46a and extends vertically upwardly, with two pairs of vertically spaced flanges 65 and 66 which form a slot or keyway 67 therebetween. The keyway 67 is shaped to be slidingly received and retained between the two pairs of clip tabs 60 at the ends of the support 30a. The pedestal 47a extends substantially continuously along the length of the web 5a. A notch 68 (Figure 10) is formed in the upper flange 65 at the terminal ends of the pedestal wall, in which the stop tabs 62 are bent to retain the channel 3a in the support 30a against longitudinal movement. The ends of the channel 3a include apertures 51a through the channel web 5a for exposing the support fasteners 41a, and permitting the partition feet 14a to extend therethrough.

To assemble the raceway 2a illustrated in Figures 9 to 14, the installer first inserts the keyway 67 of a section of channel 3a in the tab clips 60 on the support 30a. The stop tabs 62 are then bent downwardly into place to prevent longitudinal movement of the channel 3a with respect to the support 30a. This assembly is then positioned under the base of the partition 1a, and the feet 14a are inserted through the mating apertures 51a in the channel web 5a.

In operation, the raceways 2 and 2a function in substantially the same fashion. To insert a cable 6 into the raceway 2, the installer simply pushes the cable 6 inwardly against the flange 7, thereby deforming the flange downwardly in the manner illustrated in Figure 4. The flange 7 pivots about the joint where the rigid and flexible materials are connected along the side edges of the rigid web 5. These low pivot points for the flanges 7 provide a low profile structure capable of use with .U.S.-style partitions, the flanges being able to open fully to allow easy insertion and withdrawal of cables without injury to the cables. After the cable 6 has been fully inserted into the raceway 2, the free edge 8 of the channel flange 7 clears the outside surface of the cable, and the resiliency of the flange automatically returns the same to its upright position, so as to retain and conceal the cables in the raceway.

The extruded, dual durometer raceway 2 provides low profile storage for communication cables, and other casual wiring in conventional U.S. partition arrangements. The flexible flanges 7 permit the installer to easily remove and replace wires 6 from the channel without removal of the power wireway cover 64 or injury to the wires. The integral wireway construction and suspension support provide two fully insulated and separate wire receptacles for safely and conveniently storing the wires in a clean-cut attractive enclosure.

CLAIMS

1. A partition having a panel section (11) with depending, spaced apart feet (14) for supporting the panel section in a raised position and a raceway (2) for communication cables and the like, the raceway comprising: a U-shaped channel (3) connected with the panel section and extending along and beneath the base of the panel section; the U-shaped channel having a dual durometer construction with a rigid web (5) for supporting the cables thereon, and a pair of integrally formed, upstanding flanges (7) with free edges (8) disposed adjacent the bottom of the panel section to substantially enclose the raceway; one of the flanges being resiliently flexible, with sufficient stiffness to normally maintain the U-shape of the channel and thereby retain and conceal the cables therein, and sufficient flexibility to permit localized, manual, elastic deformation along the said one flange free edge for inserting and withdrawing the cables from the raceway.

2. A partition according to Claim 1 which includes a rigid, elongate support plate (30) connected with the feet and extending below the base; the said web including an upstanding pedestal (47) extending along the longitudinal centreline thereof, with an upper edge of the pedestal connected with the rigid support plate for suspending the channel therefrom.

3. A partition according to Claim 2 in which the support plate includes a plurality of downwardly bent tabs (60) which form a keyway in which a mating portion of the pedestal is slidingly received and retained.

4. A partition according to Claim 2 in which the pedestal extends generally continuously along the web and is extruded integrally therewith.

5. A partition according to Claim 4 in which the pedestal upper edge has a bead (48) and the rigid support includes a keyway (32) in which the bead is slidingly received and retained.

6. A partition according to Claim 5 in which the bead is bonded to the wall defining the keyway to integrally join the support plate and the channel.

7. A partition according to Claim 5 or Claim 6 in which the rib and keyway have a T-shape.

8. A partition according to any of the preceding claims in which the other one of the said channel flanges (7) is resiliently flexible for inserting and withdrawing cables from both sides of the partition.

9. A partition according to any of the preceding claims in which the panel section includes an electrical power wireway (18) extending along the base thereof for housing therein electrical power wires, and the communication cable raceway is disposed directly below the power wireway.

10. A partition according to Claim 9 in which the power wireway includes a pair of removable cover plates (19) enclosing the sides thereof, the cover plates having upper ends pivotally connected with the base of the panel section and lower ends with means (26) for releasably retaining the cover plates in a closed position, and in which the support plate includes a pair of outwardly extending flanges (33) with side edges positioned adjacent to the interior surfaces of the cover plates to alleviate inward deformation of the cover plates along the lower edges thereof due to impact.

11. A partition according to Claim 10 in which the cover plates include upturned lower edges (23) positioned directly underneath the lower surfaces of the support plate flanges, and abuttingly supporting the support panel along a centre area thereof to alleviate sagging.

12. A partition according to any of the preceding claims in which the channel is extruded from a non-conductive material.

FIG 1

FIG 2

FIG 3

FIG 4

FIG 6

FIG 5

FIG 7

FIG 9

FIG 10

FIG 11

FIG 12

FIG 8

FIG 13

FIG 14